# EUROPÄISCHE PATENTANMELDUNG

(11) **EP 1 709 936 A2**
(43) Veröffentlichungstag der Anmeldung: **11.10.2006**
(21) Anmeldenummer: 05020848.7
(22) Anmeldetag: 24.09.2005
(51) Int. Cl.: A61C 7/22, A61C 7/00

(54) **Kieferorthopädische Vorrichtung**

(30) Priorität: 25.09.2004 DE 102004046766
(71) Anmelder: Jeckel, Norbert, Dr. Dr., 79104 Freiburg (DE)
(72) Erfinder: Jeckel, Norbert, Dr. Dr., 79104 Freiburg (DE)

(57) **Zusammenfassung**

Eine kieferorthopädische Vorrichtung (1) dient zur kieferorthopädischen Verschiebung von Zähnen, insbesondere Backenzähnen (Molaren). Die Vorrichtung (1) hat dazu Verankerungen (3, 4) zur Befestigung der Vorrichtung (1) an dem zu verschiebenden Zahn (2) und am Restzahnbogen (5) und ein die Verankerungen (3, 4) mit Druckkräften (Pf1) beaufschlagendes Druckelement (6). Das Druckelement (6) weist einen eine Druckkraft (Pf1) ausübenden Drahtbogen (7) mit wenigstens einem caudalen Abschnitt und wenigstens einem cranialen Abschnitt auf (Fig. 1).

## Beschreibung

Die Erfindung betrifft eine kieferorthopädische Vorrichtung zur kieferorthopädischen Verschiebung von Zähnen, insbesondere Backenzähnen (Molaren), mit Verankerungen zur Befestigung der Vorrichtung an dem zu verschiebenden Zahn und am Restzahnbogen und mit einem die Verankerungen mit Druckkräften beaufschlagenden Druckelement.

Um Zahn-Fehlstellungen zu korrigieren, hat man bereits Zahnschienen entwickelt, bei denen beispielsweise ein Attachment am 6er-Zahn befestigt ist, der über einen Tragbogen mit Brackets an den vorderen Zähnen desselben Kiefers verbunden ist. Auf dem Drahtbogen kann beispielsweise eine Wendefeder angeordnet sein, die den 6er-Zahn und dessen Attachment druckbeaufschlagt. Durch diese Druckbeaufschlagung erfolgt die gewünschte Bewegung des hinteren Zahns und damit die erforderliche Korrektur der Zahnfehlstellung. Der vorbekannte Stand der Technik ist auch unter dem Stichwort "Bewegung am Bogen" bekannt.

Da sich das Attachment des druckbeaufschlagten 6er-Zahnes entlang dem Drahtbogen bewegen muss, kann es zu unerwünschten Verkantungen und damit zu einer Beeinträchtigung der Korrekturwirkung kommen. Da das Attachment vergleichsweise weit oben am Zahn angreift, da demgegenüber aber das sogenannte Widerstandszentrum des Zahnes eher im unteren Bereich - im Bereich der Wurzelbifurkation - liegt, wird auf den zu behandelnden Zahn zusätzlich eine unerwünschte Kippwirkung (Inklination) und ein entsprechendes Drehmoment (Torquierung) erzeugt.

Stand der Technik sind Formen der Verbindung eines Metall-Röhrchens mit einem Band, das zirkulär um den Molaren und lösbar fest, sich befindet, um damit einen Zahn zu fassen und daran kieferorthopädische Kräfte wirken zu lassen.

Auch sind verschiedene Ausgestaltungen von Schienen und dergleichen zur Stabilisierung des vorderen Restzahnbogens gegen die Gegenkräfte Stand der Technik.

Es besteht die Aufgabe, eine Vorrichtung zu schaffen, mit der eine Verschiebung eines Zahns gegenüber dem Restzahnbogen praktisch ohne störende Kippwirkung und/oder störende Drehmomente während der Verschiebung möglich ist.

Zur Lösung dieser Aufgabe schlägt die Erfindung insbesondere vor, dass das Druckelement einen eine Druckkraft ausübenden Drahtbogen mit wenigstens einem caudalen Abschnitt und wenigstens einem cranialen Abschnitt aufweist.
Mit der erfindungsgemäßen Vorrichtung können vorzugsweise die Molaren (dicke Backenzähne) von Patienten entsprechend der Behandlungserfordernis innerhalb des Ober-Kiefers oder Unterkiefers in distaler Richtung (nach hinten) verschoben werden. Der besondere Vorteil liegt darin, dass dies ohne Mitarbeit des Patienten, beidseitig und auch selektiv einseitig in hoher Behandlungsqualität erfolgen kann. Die besondere Behandlungsqualität beruht darin, dass die Zahnbewegung entsprechend den körperlichen Gegebenheiten, das heißt achsengerecht und verwindungsfrei erfolgt, obwohl die durch die Apparatur ausgelösten kieferorthopädischen Kräfte auch nur exzentrisch von der Achse und in definiertem Abstand vom Widerstandszentrum des Zahnes im Bereich der Zahnwurzel, angreifen können.

Durch die neuheitliche technische Ausfertigung der Vorrichtung werden die entgegenwirkenden reziproken Kraftwirkungen als Nebenwirkung technisch so gering wie möglich gehalten. Dies ist dadurch bedingt, dass die Zahnbewegung nicht "am Bogen" verläuft, sondern "mit dem Bogen". Die Kraftübertragung auf den Zahn und die dreidimensional kontrollierte Führung des Zahnes insbesondere durch eine weitestgehende Verwindungssteifheit des Drahtbogens bei der Bewegung wirken in der neuen Apparatur technisch zusammen. Es entstehen dadurch keine Reibungsverluste durch die übliche exzentrische Führung des Zahnes an einem gesonderten, allein der Führung des Zahnes dienenden Drahtbogens. Durch die herkömmliche Führung ist es immer zu einer nicht kontrollierbaren Verkantung des Drahtbogens an den Austrittsstellen des Führungsröhrchens gekommen, d.h. es entstand eine Friktion bei der Bewegung des Zahnes am Führungsbogen. Diese Friktion bewirkte, bedingt durch die Verspannung der Kieferorthopädischen Kräfte zwischen Molar und Restzahnbogen, reziproke Kräfte, die sich am anterioren (vorderen) Restzahnbogen durch Zahnbewegungen in die andere Richtung, d.h. nach mesial (vorne) bemerkbar machen und unerwünscht sind.

Weiter ist mit der Apparatur ein "komfortabler" und "bequemer" Tragekomfort gegeben und sie ist von außen nur wenig sichtbar. Darüber hinaus ist sie vom Behandler einfach am Patienten zu handhaben und sie ist kostengünstig.

Eine bevorzugte Ausführungsform der Erfindung sieht vor, dass der Drahtbogen S-förmig ausgebildet ist und zwei zumindest teilweise federelastische Schlaufen aufweist und dass eine der federelastischen Schlaufen der S-Form bereichsweise oberhalb der Kauebene (cranial) und die andere Schlaufe der S-Form bereichsweise unterhalb der Kauebene (caudal) verläuft. Die S-förmigen Schlaufen werden dabei in komprimiertem Zustand an dem zu verschiebenden Zahn sowie am Restzahnbogen befestigt, sodass die Schlaufen durch ihr Bestreben, den komprimierten Zustand zu verlassen, eine Druckkraft auf den zu verschiebenden Zahn ausüben und sich dabei am Restzahnbogen abstützen.

Eine andere zweckmäßige Ausführungsform sieht vor, dass der Drahtbogen wenigstens einen bogenförmigen, zumindest teilweise federelastischen Abschnitt und wenigstens einen wendelförmigen, federelastischen Abschnitt aufweist und dass einer der beiden Abschnitte bereichsweise oberhalb der Kauebene (cranial) und der andere Abschnitt bereichsweise unterhalb der Kauebene (caudal) verläuft.

Die Federkraft der Schlaufen kann in vorteilhafter Weise noch weiter dadurch verstärkt werden, dass zumindest der unterhalb der Kauebene verlaufende Abschnitt des Drahtbogens eine Umhüllung aus Gummi oder elastischem Kunststoff oder dergleichen elastischem Material aufweist. Eine Schlaufe mit einem gummielastisch ummantelten caudalen (nach unten gerichtetem) Abschnitt unterhalb der Kauebene ist besonders geeignet, auf das Widerstandszentrum des Zahnes zu wirken und dadurch eine achsengerechte, körperliche Molarenbewegung zu gewährleisten. Die gummielastische Ummantelung dient der verstärkten Wirkung dieses Bogenabschnitts innerhalb der bioelastischen Drahtbogenschlaufen.

Zweckmäßig ist es, wenn eine der Verankerungen eine einen Zahn umfassende Verankerungsmanschette und die andere Verankerung eine Verankerungsschiene oder eine Zahn-Krone aufweist.
Dabei ist es vorteilhaft, wenn die Verankerungsmanschette als lösbare Befestigung an dem zu verschiebenden Zahn und die andere Verankerung mit der Verankerungsschiene oder der Zahn-Krone zur lösbaren Befestigung am Restzahnbogen, vorzugsweise an dem dem zu verschiebenden Zahn benachbarten Zahn vorgesehen ist, wenn die Verankerungsmanschette eine Befestigungsstelle mit einem Röhrchen zur insbesondere axial verschiebbaren Aufnahme des ersten freien Endes des Drahtbogens aufweist und wenn das zweite freie Ende des Drahtbogens in der Verankerungsschiene oder an der Zahn-Krone insbesondere fest verankert, vorzugsweise verschraubt ist. Eine verwindungssteife Ausgestaltung der Schlaufen als auch die verwindungsstabile, lösbar feste Verankerung der Schlaufen sowohl an der Befestigungsstelle an der verankerungsmanschette als auch an der Verankerungsschiene am Restzahnbogen verhindert eine unkontrollierbare Bewegungen des Molaren, wie Inklination oder Torquierung, unter der Distalisationskraft.
Die verwindungssteife Verankerung und die vollständige elastische Rückstellkraft des bioelastischen Bogenteils verhindert trotz des exzentrischen Kraftangriffs auch eine Rotation des Molaren während der Verschiebung.

Für eine einfache Justage der Vorrichtung vor und während der Zahn-Verschiebung ist es zweckmäßig, wenn die an der einen Verankerung vorgesehene Verankerungsschiene ein formstabiles Element bildet, welches an seinem dem Drahtbogen zugewandten Ende mittels einer beweglichen Kupplung, insbesondere einer Gleitlager-Kupplung mit dem insbesondere S-förmig Drahtbogen verbunden ist. Dadurch kann auch ein Höhenausgleich zwischen der Verankerung am Restzahnbogen mit der Verankerungsschiene und der Schlaufe während der Zahn-Verschiebung erfolgen, ohne dass eine manuelle Nach-Justage durch den Arzt erfolgen muss.

Eine bevorzugte Ausführung sieht vor, dass zur Befestigung der Verankerungsschiene an einem Zahn eine geschlitzte Schraube mit einer Spannmutter vorgesehen ist, dass die geschlitzte Schraube ein insbesondere pelottenartiges Verbindungselement zur Befestigung der geschlitzten Schraube vorzugsweise mit Zahnzemant oder dergleichen Klebstoff an dem dem zu verschiebenden Zahn benachbarten Zahn am Restzahnbogen aufweist und dass die Verankerungsschiene in den Schlitz der geschlitzten Schraube eingreift und längs verstellbar sowie mittels der Spannmutter festlegbar ist.
Durch die Verstellbarkeit der verankerungsschiene in Längsrichtung kann die Vorspannung des Drahtbogens angepasst und im Verlauf der kieferorthopädischen Behandlung auch nachjustiert werden. Das Verbindungselement kann aus einem sich der Außenform des Zahns anpassbarem Metall-Netzgitter bestehen, auf welchem der Zahnzement oder dergleichen Befestigungsmaterial auftragbar ist. Eine solche Befestigung der Verankerungsschiene ist kostengünstig herstellbar und für Justagearbeiten leicht wieder lösbar.

Zweckmäßig ist es, wenn die Verankerungsschiene in Rotationsrichtung formschlüssig in der geschlitzten Schraube gehalten ist und dazu vorzugsweise zumindest in ihrem in den Schlitz der geschlitzten Schraube eingreifenden Abschnitt einen von einer rotationssymmetrischen Form abweichenden Querschnitt aufweist und vorzugsweise einen ovalen oder mehrkantigen Querschnitt hat. Die Verankerungsschiene ist dadurch in Rotationsrichtung um ihre Längsachse nach dem Einsetzen in den Schraubenschlitz bereits formschlüssig gehalten, so dass sich das System praktisch selbst stabilisiert. Durch Anziehen der Spannmutter wird die Verankerungsschiene geklemmt und in Längsrichtung festgelegt.

Dazu genügt eine vergleichsweise geringe Klemmkraft, da die Verankerungsschiene in Rotationsrichtung formschlüssig gehalten ist und dafür keine Klemmkraft erforderlich ist.

Für eine hohe Verwindungssteifheit des Drahtbogens ist es vorteilhaft, wenn der Draht des Drahtbogens einen rechteckigen oder ovalen Querschnitt, also vorzugsweise einen nicht rotationssymmetrischen Querschnitt, aufweist.

Die erfindungsgemäße Vorrichtung wird als Behandlungsmittel im zahntechnischen Labor vorbereitet. Auf einem Gipsmodell vom entsprechenden Kiefer des Patienten ist um den zu verschiebenden (distalisierenden) Zahn die Verankerungsmanschette lösbar befestigt. Es wird zur Verankerung der reziproken Kräfte am Restzahnbogen eine lösbare Verankerungsstelle hergestellt, hierin wird das durch eine Verankerungsschiene gebildete formstabile Element befestigt, mit dem das Druckelement lösbar verbunden wird. Die Verankerungsschiene kann auch direkt mit einem Zahn des anterioren Restzahnbogens verbunden werden.

Die Vorrichtung wird an die patientenbezügliche Anatomie der Zähne und des Kiefers so angepasst, dass das Druckelement spannungsfrei zwischen der Steckverbindung an der Befestigungsstelle am Molaren und der lösbaren Verankerung am Restzahnbogen zu liegen kommt. Es wird weiter geprüft, dass das Druckelement unter Kompression der Schlaufen die benachbarten Zähne und den Kiefer des Patienten nicht stört. Die Anpassung der Vorrichtung erfolgt mit Hilfe von Werkzeugen, wobei das federelastische Material der Schlaufen teilweise durch diese Werkzeuge verformbar, insbesondere verbiegbar ist (Bioelastizität) und die Schlaufen sich danach zusätzlich federnd verformen lassen und eine Federkraft aufbringen. Die verankerungsschiene wird mit Hilfe der Werkzeuge ebenfalls gebogen und dadurch entsprechend den Erfordernissen angepasst.

Am Patienten selbst wird die Verankerungsmanschette am Molaren und die Verankerungsschiene mit Zahnzement befestigt, bzw. die Verankerungsschiene an einem Zahn des Restzahnbogens direkt befestigt. Das im Labor vorangepasste Druckelement wird dann in die Befestigungsstelle des Molaren gesteckt und zunächst locker in die Verankerungsstelle am Restzahnbogen eingelegt. Nach Aktivierung des Druckelements, das heißt nach der Kompression der Schlaufen, wird die lösbar feste Verankerung am Restzahnbogen hergestellt.

Etwa vier bis sechs Wochen nachdem die kieferorthopädischen Kräfte gewirkt und der Zahn sich bewegt hat und dadurch die Spannung der komprimierten Schlaufen nachgelassen hat, wird auf die gleiche Art das Druckelement neu aktiviert, das heißt komprimiert, und erneut am Restzahnbogen die Kraft verankert.

Bei entsprechender Indikation und normalen anatomischen Gegebenheiten wirkt die erfindungsgemäße Vorrichtung zuverlässig und erreicht stets das gewünschte Behandlungsergebnis. Eine Anwendung kann im Oberkiefer bukkal (wangenwärts) oder palatinal (gaumenwärts) und/oder im Unterkiefer bukkal (wangenwärts) oder lingual (zungenwärts) erfolgen.

Nachstehend ist die Erfindung anhand der Zeichnungen noch näher beschrieben. Es zeigt in zum Teil schematisierter Darstellung:
- Fig. 1: eine Seitenansicht eines Zahnbogens mit einer erfindungsgemäßen Vorrichtung an einem gegenüber einem Restzahnbogen zu verschiebenden, bereits etwas verschobenen (distalisierten) Zahn sowie
- Fig. 2: eine Aufsicht entsprechend Fig. 1.

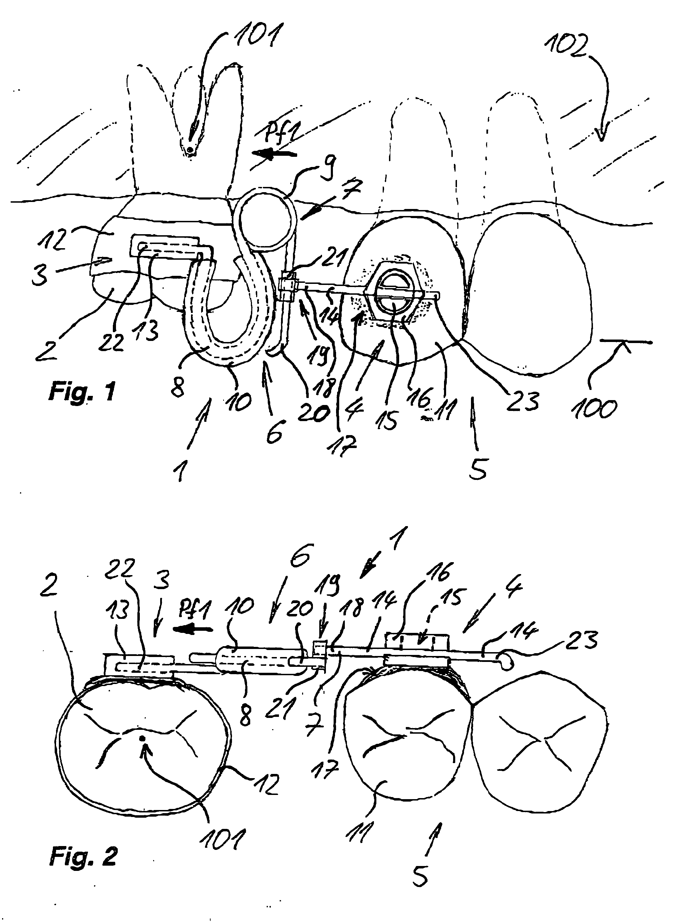

Eine im Ganzen mit 1 bezeichnete kieferorthopädische Vorrichtung zur kieferorthopädischen Verschiebung von Zähnen, insbesondere Backenzähnen (Molaren) 2, weist, in Fig. 1 deutlich erkennbare, Verankerungen 3, 4 zur Befestigung der Vorrichtung 1 an dem zu verschiebenden Zahn 2 und am Restzahnbogen 5 auf, gegenüber welchem der Zahn 2 verschoben werden soll. Zwischen den Verankerungen 3, 4 ist ein Druckelement 6 vorgesehen, welches die Verankerungen 3, 4 mit Druckkräften (Pfeil Pf1) beaufschlagt.

Die in den Fig. gezeigte Anwendung der Vorrichtung 1 bewirkt eine Verschiebung des bereits etwas gegenüber dem Restzahnbogens 5 verschobenen Zahns 2 in einem Oberkiefer 102 in distaler Richtung (distal). Die Anwendung der Vorrichtung 1 kann aber in sehr ähnlicher, funktionsgleicher Weise auch im Oberkiefer 102 gaumenwärts (palatinal) oder auch im (nicht dargestellten) Unterkiefer zungenwärts (lingual) oder wangenwärts (bukkal) erfolgen.

Wie Fig. 1 zeigt, weist das Druckelement 6 dazu einen insbesondere verwindungssteif ausgebildeten, die Druckkraft Pf1 ausübenden Drahtbogen 7 mit einem caudalen (unterhalb einer Kauebene 100) Abschnitt und einem cranialen (oberhalb der Kauebene 100) Abschnitt auf. Der Drahtbogen 7 ist dazu s-förmig ausgebildet, wobei der caudale Abschnitt durch eine zumindest teilweise federelastische, bereichsweise caudal verlaufende Schlaufe 8 und der craniale Abschnitt durch eine zumindest teilweise federelastische, bereichsweise cranial verlaufende Schlaufe 9 gebildet ist. Die caudal verlaufende Schlaufe 8 weist eine Umhüllung 10 aus gummielastischem Material auf, um die Federkraft der Schlaufe 8 zu verstärken. Diese Umhüllung 10 kann bei entsprechender Bemessung ihrer Länge und/oder entsprechender Ausbildung des Drahtbogens 7 auf diesem verschiebbar angeordnet sein, um eine Verlagerung der Widerstandskraft und eine andere Richtung der Kraftkomponente zu erreichen.

Mit den beiden, auf jeweils unterschiedlichen Seiten der Kauebene 100 verlaufenden Schlaufen 8, 9 ist eine Verschiebung des Zahns 2 relativ zum Restzahnbogen 5 ohne oder nur mit sehr geringer störender Verdrehung und/oder Neigung/Kippen relativ zur Kauebene 100 des Zahns 2 erreichbar ("Bewegung mit dem Bogen"), da die auf den Zahn 2 wirkenden Kräfte Pf1 nahe an einem, in Fig. 1 und 2 durch einen Punkt dargestelltes, Widerstandszentrum 101 angreifen. Vorbekannte Vorrichtungen erzeugten die auf den Zahn 2 wirkenden Kräfte vor allem caudal ("Bewegung am Bogen") und damit mehr vom Widerstandszentrum 101 beabstandet.

Das Beispiel in den Fig. zeigt die Verschiebung des 6er Zahns 2 gegenüber dem Restzahnbogen 5, wobei die eine Verankerung 4 an dem 5er Zahn 11 befestigt ist. Die andere Verankerung 3 weist an dem Zahn 2 eine Verankerungsmanschette 12 auf, welche den Zahn 2 an seinem Umfang umfasst, wie die Aufsicht in Fig. 2 zeigt. Die Verankerungsmanschette 12 weist eine Befestigungsstelle mit einem Röhrchen 13 auf, in das ein freies Ende 22 der Schlaufe 8 eingreift und dort verschiebbar gelagert ist.

An dem dem Zahn 2 benachbarten 5er Zahn des Restzahnbogens 11 greift die Verankerung 4 mittels einer Verankerungsschiene 14 als formstabiles Element an, welche in eine geschlitzte Schraube 15 mit einer Spannmutter 16 eingreift und dort festgeklemmt ist. Die Schraube 15 weist zur Befestigung an dem 5er Zahn 11 ein manschetten- oder pelottenartiges Verbindungselement 17 auf, welches zum Beispiel mittels Zahnzement mit dem 5er Zahn 11 verbunden ist. Das Verbindungselement 17 kann beispielsweise ein metall-netzgitterartiges Material sein, welches sich der Außenform des Zahns 11 anpasst oder an die Zahn-Außenform angepasst werden kann.

Die Verankerungsschiene 14 oder dergleichen formstabiles Element ist, wie in Fig. 1 erkennbar, mit seinem freien, der Schraube 15 abgewandten Ende 18 über eine Gleitlager-Kupplung 19 mit einem freien Ende 20 der cranialen Schlaufe 9 beweglich verbunden, sodass während der Verschiebung des Zahns 2 selbsttätig ausgleichende, insbesondere höhenausgleichende Bewegungen des Zahns 2 relativ zum Restzahnbogen 5 möglich sind. Die Gleitlager-Kupplung 19 weist dazu ein Gleitelement 21 auf, welches drehfest und axial verschiebbar auf dem freien Ende 20 der cranialen Schlaufe 9 angeordnet ist und womit das freie Ende 18 der verankerungsschiene 14 radial fest verbunden ist.

Für eine drehfeste Verschiebbarkeit des Gleitstücks 21 auf dem freien Ende 20 der cranialen Schlaufe 9 ist es vorteilhaft, wenn der Drahtbogen 7 einen rechteckigen oder ovalen oder dergleichen rotationsunsymmetrischen Querschnitt aufweist.

Auch der in den Schlitz der geschlitzten Schraube 15 eingreifenden Abschnitt der Verankerungsschiene 14 kann einen von einer rotationssymmetrischen Form abweichenden Querschnitt, zum Beispiel einen ovalen oder mehrkantigen Querschnitt aufweisen, so dass die Verankerungsschiene 14 gegen Verdrehen formschlüssig in dem Schraubenschlitz gelagert ist. Mit der Spannmutter 16 wird die verankerungsschiene in dem Schlitz gehalten und durch Anziehen auch in Längsrichtung festgeklemmt. Zum Einstellen und Nachstellen der Vorspannung des vorzugsweise S-förmigen Drahtbogens 7 wird die Spannmutter 16 etwas gelöst und die Verankerungsschiene 14 in Längsrichtung verschoben. Ein unerwünschtes Verdrehen wird dabei durch den in diese Bewegungsrichtung wirkenden Formschluss verhindert.

## Patentansprüche

1. Kieferorthopädische Vorrichtung (1) zur kieferorthopädischen Verschiebung von Zähnen, insbesondere Backenzähnen (Molaren), mit Verankerungen (3, 4) zur Befestigung der Vorrichtung (1) an dem zu verschiebenden Zahn (2) und am Restzahnbogen (5) und mit einem die Verankerungen (3, 4) mit Druckkräften (Pf1) beaufschlagenden Druckelement (6), **dadurch gekennzeichnet, dass** das Druckelement (6) einen eine Druckkraft (Pf1) ausübenden Drahtbogen (7) mit wenigstens einem caudalen Abschnitt und wenigstens einem cranialen Abschnitt aufweist.

2. Vorrichtung nach Anspruch 1, **dadurch gekennzeichnet, dass** der Drahtbogen (7) S-förmig ausgebildet ist und zwei zumindest teilweise federelastische Schlaufen (8, 9) aufweist und dass eine der federelastischen Schlaufen (9) der S-Form bereichsweise oberhalb der Kauebene (100) (cranial) und die andere Schlaufe (8) der S-Form bereichsweise unterhalb der Kauebene (100) (caudal) verläuft.

3. Vorrichtung nach Anspruch 1, **dadurch gekennzeichnet, dass** der Drahtbogen wenigstens einen bogenförmigen, zumindest teilweise federelastischen Abschnitt und wenigstens einen wendelförmigen, federelastischen Abschnitt aufweist und dass einer der beiden Abschnitte bereichsweise oberhalb der Kauebene (cranial) und der andere Abschnitt bereichsweise unterhalb der Kauebene (caudal) verläuft.

4. Vorrichtung nach einem der Ansprüche 1 bis 3, **dadurch gekennzeichnet, dass** zumindest der unterhalb der Kauebene (100) verlaufende Abschnitt des Drahtbogens (7) eine Umhüllung aus Gummi oder elastischem Kunststoff oder dergleichen elastischem Material aufweist.

5. Vorrichtung nach einem der Ansprüche 1 bis 4, **dadurch gekennzeichnet, dass** eine der Verankerungen (3) eine einen Zahn umfassende Verankerungsmanschette (12) und die andere Verankerung (4) eine Verankerungsschiene (14) oder eine Zahn-Krone aufweist.

6. Vorrichtung nach Anspruch 5, **dadurch gekennzeichnet, dass** die Verankerungsmanschette (12) als lösbare Befestigung an dem zu verschiebenden Zahn (2) und die andere Verankerung (4) mit der verankerungsschiene (14) oder der Zahn-Krone zur lösbaren Befestigung am Restzahnbogen (5), vorzugsweise an dem dem zu verschiebenden Zahn (2) benachbarten Zahn vorgesehen ist.

7. Vorrichtung nach Anspruch 5 oder 6, **dadurch gekennzeichnet, dass** die Verankerungsmanschette (12) eine Befestigungsstelle mit einem Röhrchen (13) zur insbesondere axial verschiebbaren Aufnahme des ersten freien Endes des Drahtbogens (7) aufweist und dass das zweite freie Ende des Drahtbogens (7) in der Verankerungsschiene (14) oder an der Zahn-Krone insbesondere fest verankert, vorzugsweise verschraubt ist.

8. Vorrichtung nach einem der Ansprüche 2 bis 7, **dadurch gekennzeichnet, dass** die an der einen Verankerung (4) vorgesehene verankerungsschiene (14) ein formstabiles Element bildet, welches an seinem dem Drahtbogen (7) zugewandten Ende (18) mittels einer beweglichen Kupplung, insbesondere einer Gleitlager-Kupplung (19) mit dem insbesondere S-förmig Drahtbogen (7) verbunden ist.

9. Vorrichtung nach einem der Ansprüche 1 bis 8, **dadurch gekennzeichnet, dass** zur Befestigung der verankerungsschiene (14) an einem Zahn eine geschlitzte Schraube (15) mit einer Spannmutter (16) vorgesehen ist, dass die geschlitzte Schraube (15) ein insbesondere pelottenartiges Verbindungselement (17) zur Befestigung der geschlitzten Schraube (15) vorzugsweise mit Zahnzement oder dergleichen Klebstoff an dem dem zu verschiebenden Zahn (2) benachbarten Zahn am Restzahnbogen (5) aufweist und dass die Verankerungsschiene (14) in den Schlitz der geschlitzten Schraube (15) eingreift und längs verstellbar sowie mittels der Spannmutter (16) festlegbar ist.

10. Vorrichtung nach einem der Ansprüche 1 bis 9, **dadurch gekennzeichnet, dass** der Draht des Drahtbogens (7) einen rechteckigen oder ovalen Querschnitt aufweist.

11. Vorrichtung nach Ansprüche 9 oder 10, **dadurch gekennzeichnet, dass** die Verankerungsschiene (14) in Rotationsrichtung formschlüssig in der geschlitzten Schraube (15) gehalten ist und dazu vorzugsweise zumindest in ihrem in den Schlitz der geschlitzten Schraube (15) eingreifenden Abschnitt einen von einer rotationssymmetrischen Form abweichenden Querschnitt aufweist und vorzugsweise einen ovalen oder mehrkantigen Querschnitt hat.
